**Europäisches Patentamt**

**European Patent Office**

**Office européen des brevets**

(19)

(11) Numéro de publication: **0 237 380**
**A1**

(12) ## DEMANDE DE BREVET EUROPEEN

(21) Numéro de dépôt: **87400269.4**

(22) Date de dépôt: **05.02.87**

(51) Int. Cl.³: **C 08 L 65/00**

(30) Priorité: **05.02.86 FR 8601575**

(43) Date de publication de la demande:
**16.09.87 Bulletin 87/38**

(84) Etats contractants désignés:
**DE ES GB IT NL SE**

(71) Demandeur: **HUTCHINSON**
**2 rue Balzac**
**F-75008 Paris(FR)**

(72) Inventeur: **Quilichini née Roche, Christine**
**"Narbonne"**
**F-86220 Ingrandes-sur-vienne(FR)**

(72) Inventeur: **Poueymidanette, Daniel**
**62, Chemin de la Bruyère**
**F-86100 Chatellerault(FR)**

(74) Mandataire: **Orès, Bernard et al,**
**Cabinet ORES 6, Avenue de Messine**
**F-75008 Paris(FR)**

(54) **Composition élastomère à base de polynorbornène absorbant les chocs et inserts pour chaussures de sports réalisés dans cette composition.**

(57) Composition élastomère propre à absorber des chocs comprenant du polynorbornène et un plastifiant constitué par des huiles aromatiques et naphténiques, une viscosité élevée à la température ambiante, et au moins une charge et des accélérateurs de vulcanisation, caractérisée en ce que:
- le plastifiant est présent dans la composition dans une proportion de 1/1,8 à 1/2,8 par rapport au polynorbornène,
- la composition contient un agent tackifiant présent dans le mélange dans une proportion de 1/0,5 à 1/0,3 par rapport au polynorbornène, et
- le polynorbornène a un poids moléculaire compris entre 2 000 000 et 3 000 000, et sa densité est de l'ordre de 0,90 à 0,96.

Des inserts (1) réalisés en cette composition et destinés à des chaussures de sports assurent un taux d'absorption des chocs d'environ 98, 56 %, à savoir une absorption pratiquement totale.

Application à la réalisation d'inserts amortisseurs de chocs pour chaussures de sports et notamment de tennis.

## FIG.8

EP 0 237 380 A1

La présente invention est relative à des perfectionnements aux articles chaussants et plus particulièrement aux articles chaussants destinés aux sportifs, notamment aux joueurs de tennis.

Il existe des chaussures adaptées à chaque sport (football, rugby, golf, ski, etc...), mais la chaussure de tennis en raison du confort qu'elle procure à ceux qui la portent, est devenue la chaussure "décontractée" par excellence. Cependant, si les chaussures de tennis classiques, couramment disponibles dans le commerce, conviennent parfaitement aux joueurs de tennis amateurs pour qui le tennis est une simple activité de loisirs, il n'en est pas de même des joueurs qui sont engagés dans des compétitions et en particulier des joueurs professionnels. Ceux-ci attendent en effet des techniciens qu'ils leur fournissent des équipements qui leur permettent d'acquérir une supériorité sur leurs concurrents et il est courant de voir adopter par la masse des sportifs, des articles de sport d'abord mis au point pour des joueurs de haut niveau, pour la compétition, après que les sportifs de haut niveau qui les ont testés ont fait la preuve des qualités de ces articles. La masse des sportifs espère en s'équipant de la même manière que les sportifs de haut niveau, améliorer ses propres performances et progresser grâce à ces nouveaux articles.

Pour répondre aux besoins des sportifs, la Demanderesse poursuit dans ses laboratoires de recherches, des études de mise au point de chaussures propres à protéger au maximum le pied du sportif des chocs et des torsions, ainsi que des frictions génératrices d'échauffement et de blessures, tout en réalisant un compromis optimum entre la conformation du pied et les conditions ergonomiques imposées par les nécessités de jeu, et en tenant compte des divers styles de jeu des sportifs.

C'est dans ces conditions que la Demanderesse a cherché à mettre à la disposition des sportifs et plus spécialement des joueurs de tennis, une nouvelle chaussure de tennis équipée d'une talonnette intérieure qui est réalisée en un matériau qui absorbe les chocs à près de 100 %, qui, en outre, protège le pied du sportif des chocs et des torsions, est légère, présente des propriétés d'aération du pied et d'absorption de la transpiration, assure stabilité et confort et favorise et facilite au maximum les déplacements rapides, en toute sécurité, lors des différentes composantes du jeu de tennis.

L'on connaît (Brevet français 2 328 727) des matériaux présentant des propriétés d'amortissement du bruit ou des chocs essentiellement constitués par un polyuréthane souple dont le taux de compression est inférieur à 5 %, l'allongement à la rupture est d'au moins 500 % et est avantageusement compris entre 500 et 1200 % et dont la récupération de forme après compression est relativement lente en ce qu'elle est retardée d'au moins 0,7 seconde, ce matériau présentant en outre une résistance à la traction de l'ordre de 3,5 à 7 kg/cm$^2$, une résistance à la déchirure de 2 à 2,5 kg/cm linéaire et une dureté Shore de l'ordre de 5.

Ce matériau qui résulte de la réaction d'un polyol à faible taux de ramification, tel qu'un polyalkylèneglycol, et notamment le polypropylèneglycol, avec un isocyanate en quantité inférieure à la quantité stoechiométrique, n'est pas utilisé seul mais associé à une couche en matériau rigide, peu compressible, comprenant une matrice en un polymère tel que polyuréthane dans la masse de laquelle sont enrobés des corps creux rigides constitués par des billes de 50 à 400 µm de diamètre, en résines phénoliques, silice, verre ou carbone. L'ensemble multicouches est enveloppé d'une matière résistante à l'abrasion et aux intempéries telle que PVC, caoutchouc synthétique ou naturel etc..., mais de préférence en polyuréthane , et est de préférence monté sur une plaque de base métallique. L'épaisseur de l'enveloppe est de l'ordre de 1,6 à 12 mm, l'épaisseur de la couche en polyuréthane souple est de l'ordre de 7,5 à 15 cm, de même que l'épaisseur de la couche en polyuréthane rigide.

On peut aisément comprendre que de telles structures destinées à absorber l'énergie résultant d'impacts, de chocs ou de collisions, sont inutilisables dans des chaussures, même si on en éliminait la couche de base métallique, car elles sont trop dures et inconfortables, leur densité est élevée (1,3), leurs propriétés d'absorption des chocs ne sont pas suffisantes pour garantir le joueur contre tout accident susceptible de survenir sous l'effet du choc du talon contre le sol (chaque impact du talon sur le sol correspond à un choc équivalent à quatre fois le poids du joueur et on a compté 8000 chocs/match en moyenne).

De plus il s'est avéré que ces types de matériaux vieillissent mal en ce qui concerne leurs propriétés d'amortissement, leurs taux d'absorption des chocs ou vibrations s'affaiblissant quand le nombre de chocs ou vibrations croît.

L'on connaît également (Demande de Brevet européen 121 396) des compositions de polyuréthane élastomère présentant à la fois des propriétés d'absorption des chocs et des durées de récupération de forme relativement courtes, plus particulièrement conçues pour les articles chaussants tels que semelles, semelles intérieures et chaussures de course. Ces compositions de polyuréthane ont une densité comprise entre 0,4 g/cm$^3$ et 1 g/cm$^3$ et de préférence entre 0,6 et 0,7 g/cm$^3$, une déformation par compression inférieure à 5 % environ et un temps de récupération de la forme de l'ordre de 10 à 100 millisecondes.

Ces compositions contiennent un produit de la réaction d'un composant donnant lieu à un uréthane, qui contient au moins quatre sites réactifs formant un uréthane tels que des groupes hydroxyle ou carboxyle et qui est de préférence un tétrol ou un dérivé d'éthylène diamine, d'un polyol élastifiant pris dans le groupe des diols et des triols, ou d'un plastifiant, et d'un diisocyanate mis en oeuvre en quantité inférieure à la quantité stoechiométrique, les sites réactifs uréthanogènes qui n'ont pas réagi étant stabilisés par chelation ; à ce produit est associée une charge légère qui est constituée par des billes creuses en verre, silice ou de poudre de silice frittée ou bien de cendres volantes ou encore de cendres volantes enrobées de silice, de 40 à 700 µm de diamètre. Dans le cas où le polyol élastifiant qui participe à la formation du polyuréthane est remplacé par un plastifiant, celui-ci est un adipate, un phtalate ou un phosphate.

Si ce type de matériau est effectivement susceptible d'être utilisé dans des articles chaussants, néanmoins la composition d'absorption des chocs ainsi proposée présente les mêmes inconvénients que la précédente en ce qu'elle vieillit aussi mal que celle-ci.

L'on sait également que le polynorbornène ou poly(bicyclo[2.2.1]-2-heptène) possède des propriétés d'amortissement des vibrations et des chocs. Le polynorbornène est proposé comme insert de semelles de chaussures de sport et comme insert orthopédique (sous le nom de "NORSOREX" par CdF CHIMIE). Toutefois sa déformation par compression est relativement élevée et le délai dans lequel il récupère sa forme est trop long. En outre, ses propriétés mécaniques (allongement à la rupture, résistance à la traction, résistance à la déchirure) ne sont pas bonnes puisque l'allongement à la rupture n'excède pas 340 %, la résistance à la rupture est de l'ordre de 8 MPa et la dureté de l'ordre de 45 Shore A est trop forte pour que le matériau absorbe les chocs (l'enfoncement dans le matériau étant primordial).

On connaît également d'autres publications définissant l'état de la technique et qui sont décrites ci-après.

La Demande de Brevet EP-0 046 095 (SOCIETE CHIMIQUE DES CHARBONNAGES - Invention MARBACH et al.) montre, dans la partie de sa description qui a trait à l'Art antérieur, qu'il est connu de réaliser des mélanges comportant des polynorbornènes et des plastifiants pétroliers ou synthétiques présentant, en particulier, un caractère aromatique ou naphténique.

De la description de l'état de la technique de la Demande de Brevet EP-0 046 095 il est également connu que le taux d'absorption à température ambiante des plastifiants du type susdit est particulièrement élevé avec les polynorbornènes en poudre finement divisée (granulométrie essentiellement inférieure à 3 mm) : en fait, ils peuvent absorber plus de 7 fois leur poids de plastifiant de type aromatique ou naphténique.

En ce qui concerne l'objet de l'invention MARBACH et al., celui-ci est constitué essentiellement par la réalisation, à température ambiante, d'un mélange à base de polynorbornènes et plastifiants du type susdit auquel on ajoute au moins un isocyanate, de préférence associé à un polyol, de façon à améliorer la rémanence aux contraintes mécaniques du mélange de base.

La Demande de Brevet FR-2 302 312 (SOCIETE CHIMIQUE DES CHARBONNAGES - Invention C. STEIN et al.), qui est citée dans l'invention MARBACH et al. précitée comme faisant partie de l'état de la technique correspondant, fait connaître la possibilité de choisir le taux et le type de plastifiant, constitué notamment par des huiles aromatiques et/ou naphténiques, de manière à obtenir des mélanges qui conservent une fluidité telle qu'il est possible de les conformer à froid (à savoir, à la température ambiante) par simple coulée dans des moules, matrices ou conformateurs.

6 0237380

Le Brevet US-4 504 604 (THE GOODYEAR TIRE & RUBBER COMPANY - Invention M.V. PILKINGTON et al.) concerne une composition élastomère à base de polynorbornène propre à absorber des chocs, comprenant aussi un plastifiant et une résine qui est incompatible par rapport au polynorbornène et qui est essentiellement constituée par un goudron végétal d'essence de pin ("hydrogenated pine tar resin") commercialisé sous la marque "STAYBELITE" (l'incompatibilité étant définie quantitativement par la différence des paramètres de solubilité du polynorbornène et de la résine, laquelle différence doit être égale ou supérieure à l'unité).

Les plastifiants (utilisés dans une proportion qui va de 1/0,2 à 1/4 par rapport au polynorbornène) qui sont susceptibles d'être utilisés dans le cadre de l'invention PILKINGTON, sont constitués, en particulier, par des huiles aromatiques et naphténiques à faible teneur en composants polaires, généralement inférieure à 4 % et de préférence inférieure à 2 % et en particulier égale à 1 % et même moins, et à teneur élevée en aromatiques, généralement comprise entre 20 % et 50 % et de préférence entre 30 % et 45 %.

Le poids moléculaire des huiles utilisées, tel que déterminé par la méthode ASTM-D2502, varie entre environ 200 et environ 600 et de préférence entre environ 300 et environ 450, tandis que les viscosités de ces huiles, telles que déterminées par la méthode ASTM-2161 à 99°C , varient entre environ 20 et environ 200 SUS (Saybolt Universal Seconds) et de préférence entre environ 40 et environ 125 SUS.

Les résines incompatibles sont utilisées dans une proportion qui va de 1/0,05 à 1/1,2.

La composition à base de polynorbornène proposée par PILKINGTON et al. peut, entre autres, également contenir :

- un deuxième élastomère, qui peut être constitué par exemple par un EPDM, pour améliorer la résistance à l'ozone et au vieillissement, ainsi que par d'autres élastomères dans le but d'améliorer, par exemple, la résistance à l'abrasion et la résistance aux huiles ;
- des charges, telles que de l'oxyde de zinc, de l'oxyde de magnésium, du soufre et du noir de carbone, des accélérateurs de vulcanisation et des anti-oxydants.

Le Brevet GB-1 341 740 (SOCIETE CHIMIQUE DES CHARBONNAGES) concerne une structure composite propre à absorber les vibrations, comprenant une couche réalisée en une composition élastomère à base de polynorbornène, liée à au moins un substrat.

La composition élastomère susdite contient, pour 100 parties en poids de polynorbornène, 300 à 700 parties en poids d'un matériau compatible avec le polynorbornène et ayant une température d'ébullition supérieure à 80°C et une température de congélation inférieure à -30°C, ce matériau ne contenant pas d'insaturation éthylénique.

Le matériau intervenant dans la composition à base de polynorbornène et ayant les propriétés précitées est choisi dans un groupe de matériau comprenant, en particulier, des hydrocarbures aromatiques et naphténiques, éventuellement combinés entre eux, qui sont compatibles avec les polynorbornènes en toutes proportions (à ce sujet voir aussi l'analyse précédente de l'invention MARBACH et al.).

Des charges organiques ou inorganiques peuvent être également ajoutées à la composition élastomère.

Le Brevet LU-56344 (CHARBONNAGES DE FRANCE) concerne des compositions élastomères à base d'un composé macromoléculaire constitué d'homopolymères et de copolymères complètement amorphes, qui sont obtenus à partir des polynorbornènes et dont les substituants ont des chaînes courtes répondant à une formule bien définie, lesquelles compositions ont, entre autres, une température de transition

8

vitreuse inférieure à environ -10°C (la température de transition vitreuse est la température au-dessus de laquelle la composition est sous forme caoutchouteuse, tandis qu'au-dessous elle est sous forme de matière rigide).

De telles compositions sont obtenues par un choix approprié du taux dudit composé macromoléculaire et d'au moins un composé peu volatil ayant un point de congélation inférieur à -30°C ne contenant pas d'insaturation éthylènique.

Parmi les composés à point de congélation inférieur à -30°C, on propose d'utiliser en particulier des mélanges d'hydrocarbures relativement lourds, de préférence constitués par des hydrocarbures aromatiques et/ou naphténiques qui sont compatibles en toutes proportions avec les polymères ou copolymères.

En pratique, leur taux est fonction des propriétés recherchées, par exemple bonne résistance à la rupture ou température de transition vitreuse très basse.

La Demande de Brevet GB- 2 087 902 (HOHYU RUBBER CO. LTD - Invention A. NAKAHIRA) est relative à un matériau élastomère apte à amortir les chocs et, en particulier, à être utilisé pour la fabrication de chaussures ainsi que comme matériau d'isolation phonique.

Le matériau NAKAHIRA présente une dureté qui est comprise entre 30°, selon l'échelle dite de type A et 15°, selon l'échelle dite de type F, ainsi qu'une résistance aux impacts non inférieure à 50 %.

En particulier, le matériau en question est constitué par une composition élastomère comprenant un taux approprié de polynorbornène, d'élastomère factice et d'agent d'assouplissement.

La Demande de Brevet EP-0 105 775 (SOCIETE CHIMIQUE DES CHARBONNAGES - Invention H. NAGAI et al.) concerne des produits finis réalisés en un matériau polymère à fonction mémoire (à savoir, capables de reprendre leur forme initiale après avoir été soumis à une déformation à l'état solide, suivie d'un refroidissement jusqu'à la température de transition vitreuse du polymère et d'un réchauffement au-dessus de cette température) constitué d'une composition comprenant un taux approprié minimal (égal à 25 %) d'un polymère choisi parmi des copolymères, homopolymères et monomères appropriés qui, en particulier, peuvent se référer au norbornène et ses dérivés.

Or, s'il est vrai que l'analyse de l'état de la technique montre que le Brevet US-4 504 604 (qui associe aux deux composés polynorbornène et huiles aromatiques/naphténiques une résine incompatible avec le polynorbornène) est manifestement le document de l'Art antérieur le plus proche de l'objet de la Demande de Brevet en instance et qu'il fait connaître la possibilité d'utiliser des huiles aromatiques et naphténiques :

. ayant une teneur élevée en aromatiques et une faible teneur en composants polaires,

. ayant une teneur en aromatiques qui peut être supérieure à 44 %,

. ayant une viscosité élevée,

. ayant une teneur en composants polaires au moins comprise entre 1 % et 3 %,

. présentes dans la composition dans une proportion comprise entre 1/0,2 et 1/4, par rapport au polynorbornène,

. coopérant avec des charges, en particulier constituées par de l'oxyde de zinc, ainsi que du soufre et des accélérateurs de vulcanisation,

il est aussi vrai que, la possibilité de combiner entre eux un polynorbornène avec au moins un plastifiant et d'utiliser comme plastifiant des huiles aromatiques et/ou naphténiques était déjà connue de la Demande de Brevet FR-2 302 312 (STEIN et al.), en sorte que l'apport essentiel du Brevet US-4 504 604, PILKINGTON et al., se limite (conformément aux termes mêmes de la revendication 1 de ce Brevet américain) simplement - comme déjà précisé plus haut - à faire coopérer la combinaison connue polynorbornène/plastifiant avec une résine incompatible par rapport au polynorbornène et constituée essentiellement par un goudron végétal d'essence de pin ("hydrogenated pine tar resin") du type commercialisé sous la marque de fabrique "STAYBELITE".

De même, les inventions au nom de LA SOCIETE CHIMIQUE DES CHARBONNAGES se limitent à faire coopérer la combinaison connue susdite polynorbornène/plastifiant avec un composant particulier (essentiellement constitué par un isocyanate dans la Demande de Brevet EP-0 046 095) et/ou à fixer les taux de plastifiant, choisis en fonction des propriétés requises du produit final (c'est dans cette optique qu'il faut interpréter également les taux des différents composants proposés par PILKINGTON et al.).

Quant aux types de charges utilisées par PILKINGTON et al. et à l'emploi d'accélérateurs de vulcanisation, ils font partie des connaissances de l'homme du métier et n'ajoutent rien de vraiment original à la composition proposée, qui demeure radicalement différente de celle qui fait l'objet de la présente invention (d'ailleurs, le Brevet LU-56 344, qui est antérieur au Brevet PILKINGTON et al., fait déjà connaître la possibilité d'utiliser dans des compositions du type susdit des charges que l'on utilise habituellement dans le domaine des caoutchoucs, et en particulier des charges de silice et de kaolin).

La présente invention s'est donc donné pour but de pourvoir à des compositions de matière présentant des propriétés d'absorption des chocs très supérieures à celles des compositions de matière proposées dans l'Art antérieur, alliées à des propriétés mécaniques qui en font un matériau de choix pour être utilisé dans les semelles d'articles chaussants et notamment de chaussures de tennis en tant qu'insert propre à jouer un rôle amortisseur des chocs d'une grande efficacité puisqu'il les absorbe pratiquement totalement.

La présente invention a pour objet une composition élastomère propre à absorber les chocs, comprenant :

- du polynorbornène et un plastifiant constitué par des huiles aromatiques et naphténiques à teneur élevée, d'au moins 45 %, en aromatiques et à faible teneur en composants polaires, de l'ordre de 1 à 3 % environ, par rapport au polynorbornène,
- une viscosité élevée à la température ambiante,
- au moins une charge et des accélérateurs de vulcanisation, laquelle composition est caractérisée en ce que :
- le plastifiant est présent dans la composition dans une proportion de 1/1,8 à 1/2,8 par rapport au polynorbornène,
- la composition contient en outre un agent tackifiant, qui est constitué de préférence par des résines solides de la famille des coumarones et qui est présent dans le mélange dans une proportion de 1/0,5 à 1/0,3 par rapport au polynorbornène, et
- le polynorbornène qui constitue l'élastomère de base de ladite composition a un poids moléculaire compris entre 2 000 000 et 3 000 000, et en ce que sa densité est de l'ordre de 0,90 à 0,96.

L'introduction d'un agent tackifiant dans la composition de matière conforme à la présente invention est surprenante en elle-même car elle est contraire aux usages qui veulent que l'on introduise dans ce genre de mélange des agents anti-tackifiants (cf. à ce sujet le Brevet français 2 328 727 mentionné plus haut), et elle procure, en outre, des résultats favorables inattendus, en ce qu'elle diminue la dureté du mélange, facilite le mélangeage et augmente les propriétés d'amortissement du polynorbornène.

Selon un mode de réalisation avantageux de la composition élastomère conforme à l'invention, celle-ci est telle que :

- le polynorbornène et le plastifiant sont présents dans le rapport de 1/2,8, ce qui permet d'obtenir des propriétés d'amortissement des chocs accrues,

- le polynorbornène et l'agent tackifiant sont présents dans le rapport de 1/0,5,

- les composants polaires sont constitués par du polyéthy-lèneglycol, qui est présent dans une proportion de l'ordre de 3 % par rapport au polynorbornène,

- la charge est essentiellement constituée par de la silice dans une proportion de l'ordre de 1/1,2 par rapport au polynorbornène.

Une telle composition de matière présente des propriétés mécaniques particulièrement adaptées à l'usage en tant qu'insert d'absorption des chocs dans des chaussures de sport et plus particulièrement des chaussures de tennis, et de façon spécifique : un allongement à la rupture en traction qui est d'au moins 500 % et est avantageusement compris entre 500 % et 800 %, une résistance à la rupture en traction de l'ordre de 10MPa environ, un module de traction (à 300 % d'allongement) de l'ordre de 7,5MPa, une résistance au déchirement de l'ordre de $20 \pm 2$ daN/cm, une densité de l'ordre de 1,15 à 1,20 et une dureté Shore A de 18 à 22, toutes propriétés qui conviennent à un style de jeu de tennis de fond de court et à des déplacements latéraux.

Selon un autre mode de réalisation avantageux de la composition élastomère conforme à l'invention, celle-ci est telle que :

- le polynorbornène et le plastifiant sont présents dans le rapport de 1/1,8, ce qui permet d'obtenir une compacité et une dureté accrues,

- le polynorbornène et l'agent tackifiant sont présents dans le rapport 1/0,3,

- les composants polaires sont constitués par du polyéthy-lèneglycol, qui est présent dans une proportion de l'ordre de  1 % par rapport au polynorbornène,

- la charge est essentiellement constituée par de la silice et de l'argile, présente dans une proportion de l'ordre de 1/1 par rapport au polynorbornène, la silice étant présente dans la charge à raison de 40 % environ et l'argile à raison de 60 % environ.

Une telle composition de matière présente des propriétés mécaniques particulièrement adaptées à l'usage en tant qu'insert d'absorption des chocs dans des chaussures de sport et plus particulièrement des chaussures de tennis, et, de façon spécifique : un allongement à la rupture en traction de l'ordre de 360 à 600 %, une résistance à la rupture en traction de l'ordre de 20MPa, un module de traction (à 300 % d'allongement) de l'ordre de 5,5MPa, une résistance au déchirement de l'ordre de 50 $\pm$ 3 daN/cm, une densité de 1,10 à 1,15, une dureté Shore A de 33 à 37, toutes propriétés qui conviennent à un jeu d'attaque comportant des déplacements rapides et des montées au filet.

Conformément à un autre mode de réalisation de la composition élastomère conforme à la présente invention, celle-ci contient en outre des charges et des accélérateurs de vulcanisation appropriés, ainsi qu'éventuellement des matières colorantes.

Selon une disposition avantageuse de l'invention, le polynorbornène qui constitue l'élastomère de base de la composition conforme à l'invention, a un poids moléculaire compris entre 2 000 000 et 3 000 000 et sa densité est de l'ordre de 0,90 à 0,96.

Selon une autre disposition avantageuse de l'invention, la composition contient un mélange d'accélérateurs de vulcanisation présent à raison de 5,5 à 6,5 % par rapport au polynorbornène, ainsi que du soufre de vulcanisation avantageusement présent à raison d'environ 1,5 % par rapport au polynorbornène.

La présente invention a également pour objet des inserts visco-élastiques destinés à être insérés dans des chaussures de sport et notamment des chaussures de tennis, caractérisés en ce qu'ils sont propres à assurer un taux 0237380
d'absorption des chocs de 98,56 %,et en ce qu'ils sont
réalisés en une composition de matière conforme à l'un
quelconque des groupes de revendications 1, 2, 4, 5 ou
1, 3, 4, 5.

Selon un mode de réalisation desdits inserts,
ceux-ci sont réalisés en une composition de matière présentant une dureté Shore A de l'ordre de 18 à 22.

Selon un autre mode de réalisation desdits
inserts, ceux-ci sont réalisés en une composition de matière
présentant une dureté Shore A de l'ordre de 33 à 37.

Selon encore un autre mode de réalisation desdits
inserts, ceux-ci sont venus de moulage par compression et
présentent une épaisseur qui peut varier de 5 à 15 mm.

De ce qui précède, il est donc clair que les
différences principales de la composition objet de l'invention pendante par rapport à l'état de la technique antérieure, et notamment par rapport à la composition PILKINGTON
et al., consistent en ce que :

- d'abord,la combinaison (connue) polynorbornène/plastifiant
  coopère avec des agents tackifiants, ce qui est (nous le
  répétons) contraire aux enseignements de l'Art antérieur,
  qui veulent qu'on introduise dans ce type de mélanges des
  agents anti-tackifiants, et procure des résultats favorables inattendus en ce qui concerne la diminution de la
  dureté du mélange, la facilité de mélangeage et l'augmentation des propriétés d'amortissement du polynorbornène ;

- ensuite,le caractère incompatible par rapport au polynorbornène ne s'applique pas aux agents tackifiants (comme
  c'est, au contraire, le cas des résines utilisées par
  PILKINGTON et al.);

- en outre :

  . les intervalles de valeurs 1/1,8 à 1/2,8 et de 1/0,5 à
    1/0,3, respectivement, pour la proportion de plastifiant
    et d'agent tackifiant par rapport au polynorbornène, sont critiques pour obtenir les propriétés mécaniques qui font l'objet des revendications 2 et 3, et

. les valeurs indiquées pour le poids moléculaire et la densité du polynorbornène dans la revendication 1 sont impératifs pour obtenir les propriétés mécaniques recherchées susdites.

Par contre, il est évident que les taux des agents (soufre) et des accélérateurs de vulcanisation ainsi que les valeurs de viscosité à la température ambiante (cf. les revendications 4 et 5) ne sont pas impératifs pour l'obtention des propriétés recherchées.

Outre les dispositions qui précèdent, l'invention comprend encore d'autres dispositions, qui ressortiront de la description qui va suivre.

La présente invention sera mieux comprise à l'aide du complément de description qui va suivre, qui comprend des exemples de compositions de matière conformes à la présente invention et donne des résultats de tests comparatifs d'amortissement en se référant aux dessins annexés dans lesquels :

- les figures 1, 2 et 3 représentent des diagrammes qui font apparaître les résultats des tests d'amortissement réalisés respectivement avec du polyuréthane (P.U.) le matériau qui fait l'objet du Brevet européen mentionné dans le préambule (désigné sur les dessins sous le nom de "P.U.B.E.") et la composition de matière conforme à l'invention (désignée sur les dessins sous le nom de "P N B").

- les figures 4, 5 et 6 représentent des diagrammes force/pénétration.

- la figure 7 représente un insert ou talonnette conforme à la présente invention et

- la figure 8 représente une chaussure dans laquelle est insérée une talonnette selon la figure 7.

Il doit être bien entendu, toutefois, que les exemples qui vont suivre et les dessins annexés sont donnés uniquement à titre d'illustration de l'objet de l'invention, dont ils ne constituent en aucune manière une limitation.

EXEMPLES 1 et 2 de compositions présentant des propriétés d'absorption des chocs

Le Tableau I qui va suivre donne deux compositions conformes à l'invention à base de polynorbornène, aptes à absorber les chocs dans une proportion de 98,56 %.

TABLEAU I

| Composants | Composition amortissante I à propriétés amortissantes accrues (% en poids) | Composition amortissante II à compacité accrue (% en poids) |
|---|---|---|
| Polynorbornène ("NORSOREX" de CdF Chimie) | 17,3 % | 23 % |
| Plastifiant à haute viscosité, à taux élevé en aromatiques et à faible teneur en constituants polaires ("SUNTHENE" de la SUN OIL Cy) | 48,6 % | 41,4 % |
| Agent tackifiant (résine de polyindène/coumarone, telle que le "NORSOLENE" de CdF Chimie) | 8,6 % | 6,9 % |
| Zn O | 0,8 % | 1,1 % |
| Acide stéarique | 0,17 % | 0,23 % |
| $SiO_2$ | 20,8 % | 9,2 % |
| Argile | - | 13,8 % |
| $TiO_2$ | 1,73 % | 2,3 % |
| P E G (activateur de vulcanisation) | 0,5 % | 0,23 % |
| Mélange d'accélérateurs de vulcanisation | 0,95 % | 1,25 % |
| S | 0,26 % | 0,34 % |

0237380

Pour préparer ces compositions de matière, les constituants du mélange sont introduits dans un mélangeur type Banbury.

Aux constituants de la composition I on ajoute un colorant vert tel, par exemple, que celui qui est désigné par le N° PG 7-74260 dans le Colour Index et aux constituants de la composition II on ajoute un colorant rouge tel, par exemple, que celui qui est désigné par le N° PR 37-21205 dans le Colour Index.

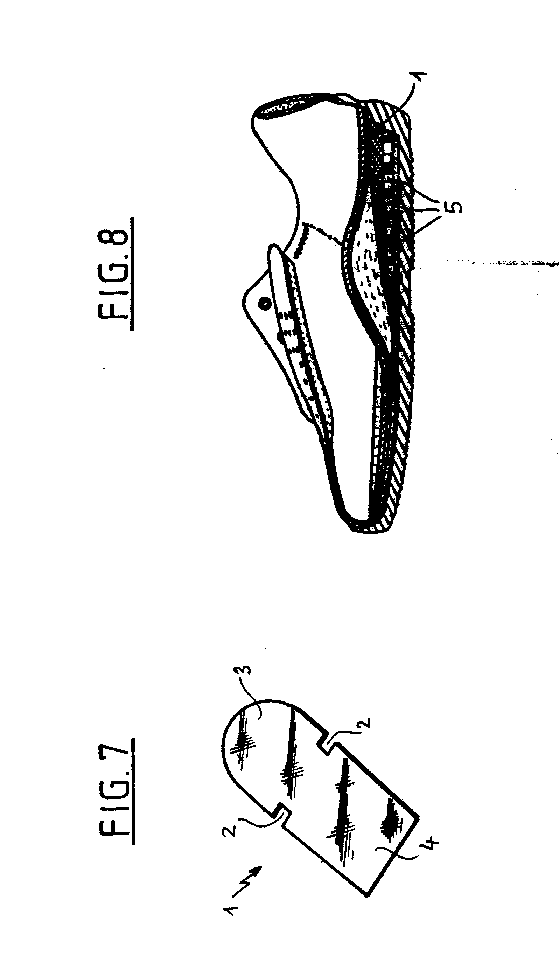

A partir des compositions I et II préparées de la sorte, on moule par compression, à une température comprise entre 150 et 180°C, des inserts ou "talonnettes" de forme appropriée, de 10 mm d'épaisseur ; un exemple de réalisation d'un tel insert est représenté en une vue en perspective à la figure 7 et en une vue de côté en place dans une chaussure de sport, à la figure 8. La talonnette 1 peut avantageusement comporter des encoches 2 qui délimitent d'une part la partie "talon" 3 et d'autre part la partie "cambrure" 4 de la talonnette. La talonnette 1 peut être amovible, auquel cas les encoches 2 servent à la fixation de la talonnette par clipsage sur une grille de caoutchouc 5 sousjacente.

Les caractéristiques mécaniques des talonnettes réalisées en compositions I et II sont réunies dans le Tableau II ci-après.

TABLEAU II

0237380

|  | COMPOSITION I | COMPOSITION II |
|---|---|---|
| Allongement à la rupture en traction | 600 ± 30 % | 470 ± 25 % |
| Résistance à la rupture en traction | 10 ± 1 MPa | 20 ± 2 MPa |
| Module de traction à 300 % d'allongement | 7,5 ± 0,5 MPa | 5,5 ± 0,5 MPa |
| Résistance au déchirement | 20 ± 2 daN/cm | 50 ± 3 daN/cm |
| Densité | 1,17 ± 0,02 | 1,13 ± 0,02 |
| Dureté | 20 ± 2 Shore A | 35 ± 2 Shore A |

Des tests comparatifs d'amortissement ont été réalisés sur trois types de matériaux pour démontrer la supériorité des compositions de matière conformes à l'invention sur les compositions connues dans l'Art antérieur.

Les matériaux testés ont été les suivants :
- Polyuréthane (PU) densité : 0,45
- Composition selon le Brevet européen 121 396 (PUBE)
- Composition I conforme à l'invention (PNB I) moulés sous forme de talonnettes de 10 mm d'épaisseur.

Les conditions de réalisation des tests ont été les suivantes :

| Diamètre de l'impacteur | (mm) | : | 35 |
| Hauteur de chute | (m) | : | 0,1 |
| Masse de l'impacteur | (kg) | : | 8,16 |
| Vitesse initiale | (m/s) | : | 1,401 |
| Contrainte statique | (Kpa) | : | 83,201 |

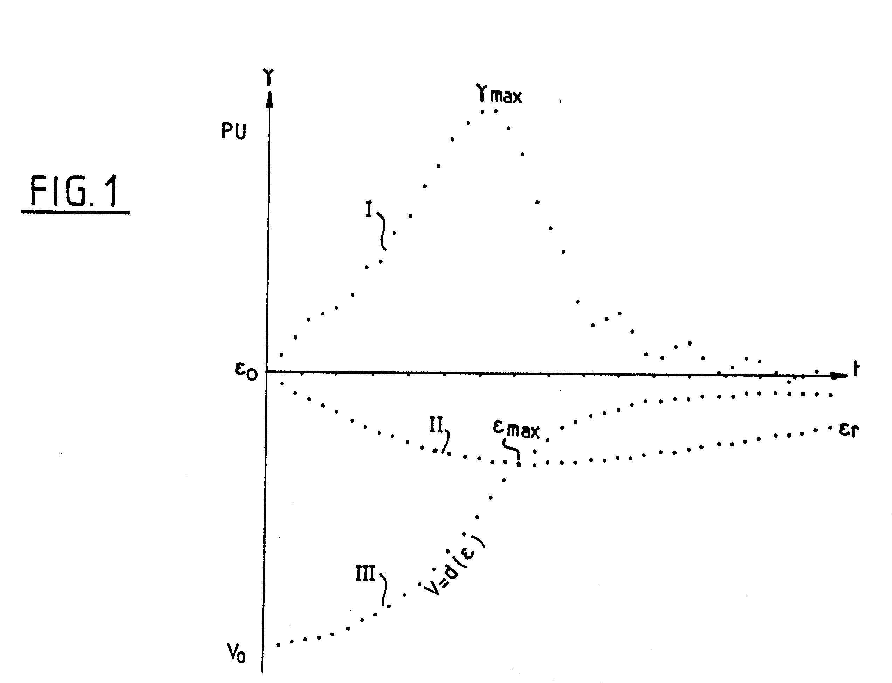

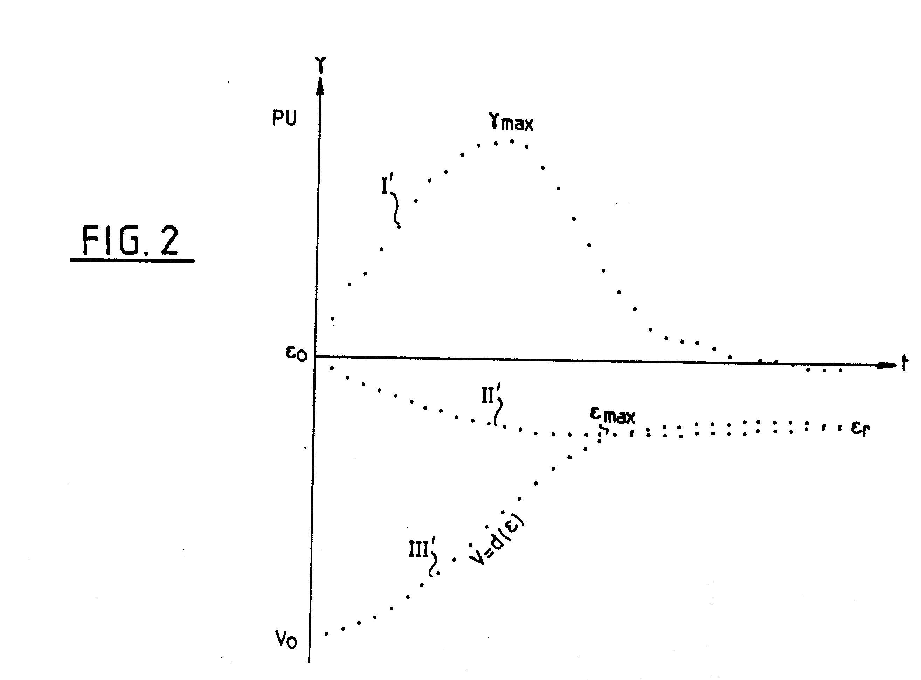

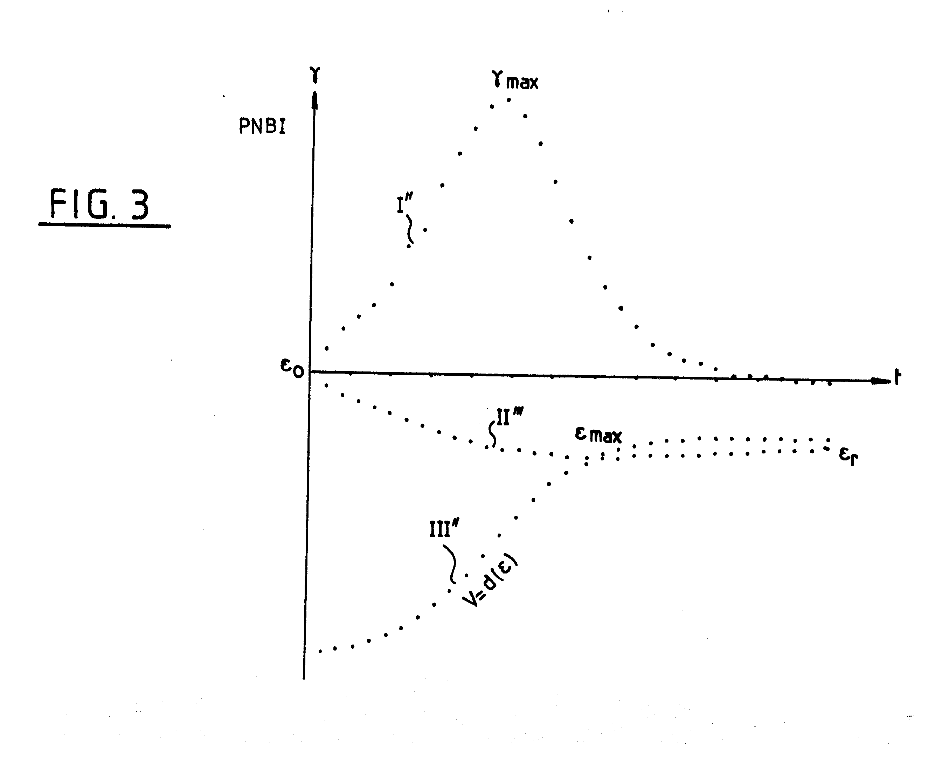

Les résultats des tests sont illustrés dans les diagrammes représentés aux figures 1, 2 et 3, relatifs aux tests réalisés respectivement avec le PU, le PUBE, et le PNB I.

Les courbes I, I' et I" représentent la courbe de décélération γ en fonction du temps t.

Les courbes II, II' et II" représentent la courbe d'enfoncement (Er indiquant l'enfoncement résiduel), en fonction du temps t.

Les résultats obtenus sont réunis dans le Tableau III ci-après :

### TABLEAU III

|  |  | PU | PUBE | PBN I |
|---|---|---|---|---|
| Vitesse finale | (m/s) | 0,506 | 0,178 | 0,191 |
| Coefficient de restitution | (m/s) | 0,13 | 0,016 | 0,018 |
| Accélération maximale | (g) | 48,318 | 40,589 | 50,229 |
| Temps de contact | (s) | 0,0287 | 0,245 | 0,0238 |
| Enfoncement résiduel | (mm) | 2,769 | 3,947 | 4,205 |
| Enfoncement maximal | (mm) | 5,956 | 4,891 | 5,174 |
| Energie potentielle | (J) | 8,004 | 8,004 | 8,004 |
| Energie apportée | (J) | 8 | 8,001 | 8,004 |
| Energie restituée | (J) | 1,043 | 0,128 | 0,151 |
| Energie perdue | (J) | 6,957 | 7,874 | 7,854 |

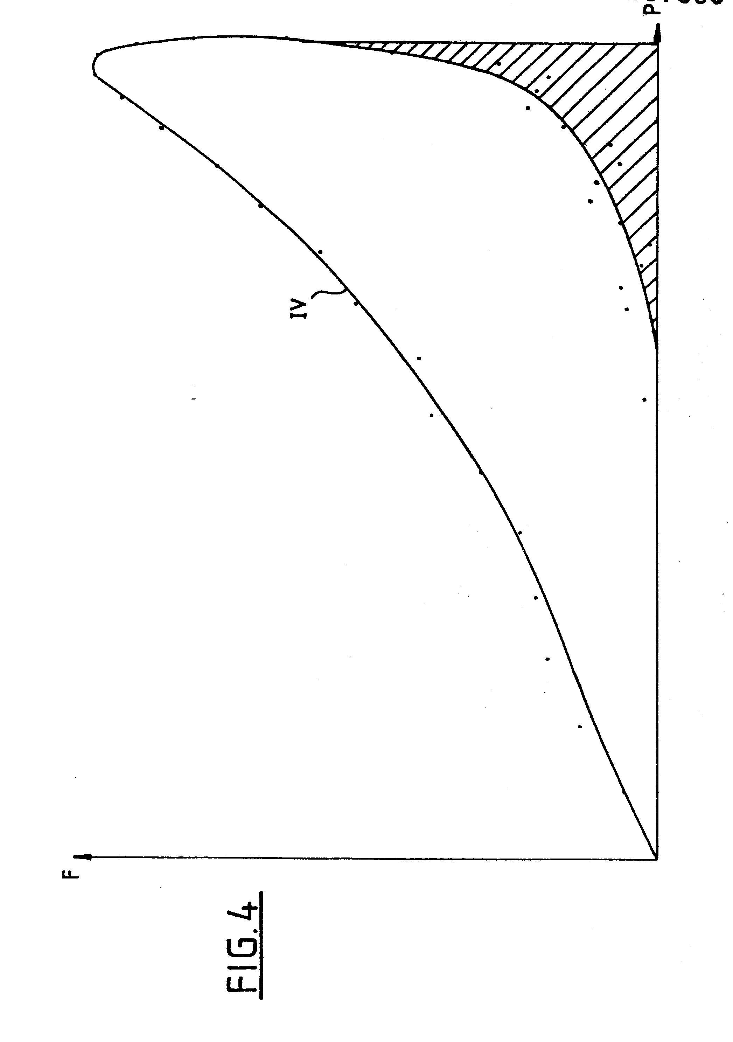

Le rapport entre l'énergie absorbée par chacun des matériaux testés et l'énergie restituée par ceux-ci est représenté sous forme de diagramme force/pénétration aux figures 4, 5 et 6. Les diagrammes ont été obtenus dans les mêmes conditions que celles du Tableau III, en ayant calculé la force $F = m\gamma$, m étant la masse de l'impacteur, $\gamma$ la décélération de l'impacteur lors de son enfoncement dans l'échantillon. La valeur de pénétration a été obtenue en intégrant deux fois la valeur de décélération (1ère intégration⟶vitesse, 2ème intégration⟶déplacement).

Dans chacune des figures 4, 5 et 6, la zone "blanche" délimitée par les courbes enveloppes IV, IV' et IV" respectivement, représente l'énergie absorbée par le matériau testé, respectivement PU, PUBE et PNB I, et la zone ombrée représente l'énergie restituée par le matériau.

Le coefficient de restitution est donné par l'équation :

$$\left[ \frac{\text{Vitesse finale}}{\text{Vitesse initiale}} \right]^2$$

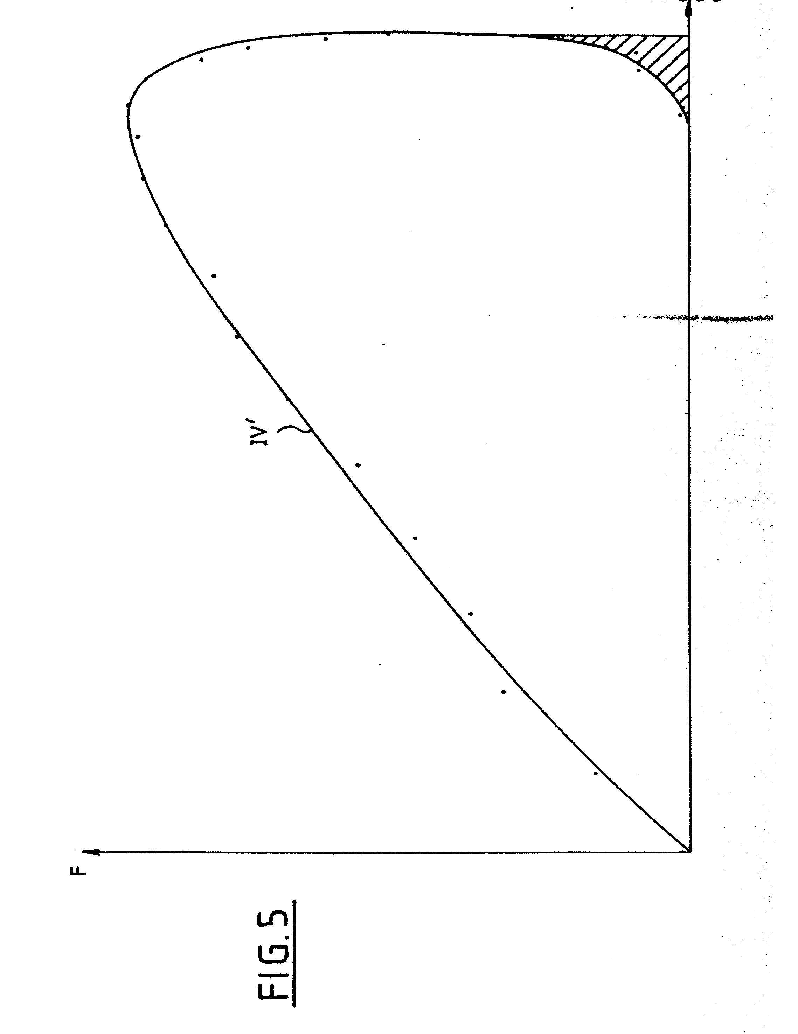

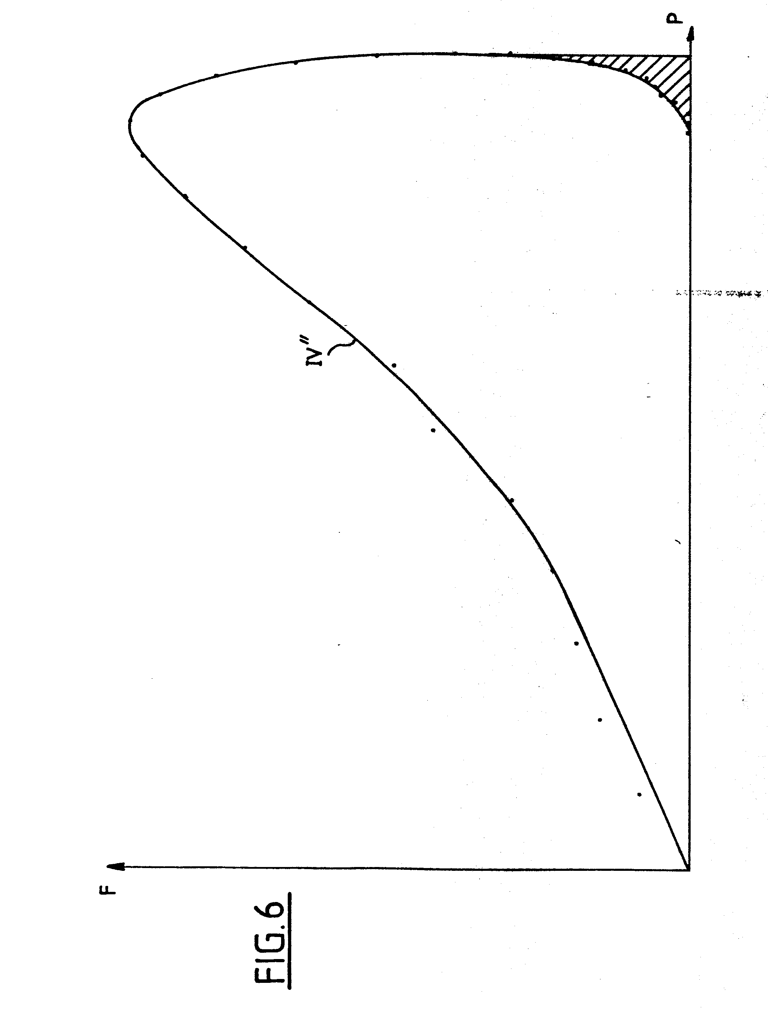

Le résultat optimum est visible à la figure 6 relative à PNB I, qui montre un minimum d'énergie restituée et un pic de décélération maximum aussi faible que possible et en tous cas inférieur à ceux des figures 4 et 5.

Il a été démontré que chaque impact du talon sur le sol correspond à quatre fois le poids du joueur (8000 chocs/match en moyenne) ; or le PU n'absorbe que 85,5 % de l'énergie d'impact, alors que le PNB et en particulier le PNB I absorbe 98,56 % de l'énergie d'impact. Ceci montre l'accroissement de l'amortissement des chocs par rapport aux matériaux proposés dans l'Art antérieur.

Ainsi que cela ressort de ce qui précède, l'invention ne se limite nullement à ceux de ses modes de réalisation et d'application qui viennent d'être décrits de façon plus explicite ; elle en embrasse au contraire toutes les variantes qui peuvent venir à l'esprit du technicien en la matière, sans s'écarter du cadre, ni de la portée, de la présente invention.

22

REVENDICATIONS

1.- Composition élastomère propre à absorber des chocs, comprenant :

- du polynorbornène et un plastifiant constitué par des huiles aromatiques et naphténiques à teneur élevée, d'au moins 45 %, en aromatiques et à faible teneur en composants polaires, de l'ordre de 1 à 3 % environ, par rapport au polynorbornène,

- une viscosité élevée à la température ambiante,

- au moins une charge et des accélérateurs de vulcanisation, laquelle composition est caractérisée en ce que :

- le plastifiant est présent dans la composition dans une proportion de 1/1,8 à 1/2,8 par rapport au polynorbornène,

- la composition contient en outre un agent tackifiant, qui est constitué par des résines solides de la famille des coumarones et qui est présent dans le mélange dans une proportion de 1/0,5 à 1/0,3 par rapport au polynorbornène, et

- le polynorbornène qui constitue l'élastomère de base de ladite composition a un poids moléculaire compris entre 2 000 000 et 3 000 000, et en ce que sa densité est de l'ordre de 0,90 à 0,96.

2.- Composition selon la revendication 1, caractérisée en ce que :

- le polynorbornène et le plastifiant sont présents dans le rapport de 1/2,8, ce qui permet d'obtenir des propriétés d'amortissement des chocs accrues,

- le polynorbornène et l'agent tackifiant sont présents dans le rapport 1/0,5,

- les composants polaires sont constitués par du polyéthylèneglycol, qui est présent dans une proportion de l'ordre de 3 % par rapport au polynorbornène,

- la charge est essentiellement constituée par de la silice dans une proportion de l'ordre de 1/1,2 par rapport au polynorbornène,

- elle présente :

. un allongement à la rupture en traction qui est d'au moins 500 % et est  compris  entre 500 % et 800 %,

. une résistance à la rupture en traction de l'ordre de
10MPa environ,

. un module de traction (à 300 % d'allongement) de l'ordre
de 7,5MPa,

. une résistance au déchirement de l'ordre de 20 ± 2
daN/cm,

. une densité de l'ordre de 1,15 à 1,20 et

. une dureté Shore A de 18 à 22,

ces propriétés mécaniques rendant la composition particulièrement adaptée à l'usage en tant qu'insert d'absorption
des chocs dans des chaussures de sports, et plus particulièrement dans des chaussures de tennis pour un style de
jeu de tennis de fond de court et pour des déplacements
latéraux.

3.- Composition selon la revendication 1,
caractérisée en ce que :

- le polynorbornène et le plastifiant sont présents dans
le rapport de 1/1,8, ce qui permet d'obtenir une compacité
et une dureté accrues,

- le polynorbornène et l'agent tackifiant sont présents
dans le rapport 1/0,3,

- les composants polaires sont constitués par du polyéthy-
lèneglycol, qui est présent dans une proportion de l'ordre de
1 % par rapport au polynorbornène,

- la charge est essentiellement constituée par de la silice
et de l'argile, présente dans une proportion de l'ordre de
1/1 par rapport au polynorbornène, la silice étant
présente dans la charge à raison de 40 % environ et
l'argile à raison de 60 % environ,

- elle présente :

. un allongement à la rupture en traction de l'ordre de
360 à 600 %,

. une résistance à la rupture en traction de l'ordre de
20MPa,

. un module de traction (à 300 % d'allongement) de l'ordre de 5,5MPa,

. une résistance au déchirement de l'ordre de 50 ± 3 daN/cm,

. une densité de 1,10 à 1,15,

. une dureté Shore A de 33 à 37,

ces propriétés mécaniques rendant la composition particulièrement adaptée à l'usage en tant qu'insert d'absorption des chocs dans des chaussures de sports, et plus particulièrement dans des chaussures de tennis pour un jeu d'attaque comportant des déplacements rapides et des montées au filet.

4.- Composition selon la revendication 1, caractérisée en ce que la viscosité à la température ambiante est de l'ordre de 600 à 700 poiseuilles (≅ 6000 à 7000 centipoises).

5.- Composition selon la revendication 1, caractérisée en ce que les accélérateurs de vulcanisation sont présents à raison de 5,5 à 6,5 % par rapport au polynorbornène,et en ce que du soufre de vulcanisation est présent à raison d'environ 1,5 % par rapport au polynorbornène.

6.- Inserts visco-élastiques destinés à être insérés dans des chaussures de sport, et notamment des chaussures de tennis, caractérisés en ce qu'ils sont réalisés en une composition de matière, selon l'une quelconque des revendications 1, 2, 4 ou 5, et en ce qu'ils sont propres à assurer un taux d'absorption des chocs d'environ 98,56%.

7.- Inserts visco-élastiques destinés à être insérés dans des chaussures de sport,et notamment des chaussures de tennis, caractérisés en ce qu'ils sont réalisés en une composition de matière selon l'une quelconque des revendications 1,3,4 ou 5, et en ce qu'ils sont propres à assurer un taux d'absorption des chocs d'environ 98,56%.

FIG. 1

FIG. 2

FIG. 3

0237380

0237380

FIG.4

FIG.5

IV'

0237380

FIG.6

# FIG. 7

# FIG. 8

Office européen
des brevets

RAPPORT DE RECHERCHE EUROPEENNE

Numero de la demande

**0237380**

EP  87 40 0269

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | US-A-4 504 604  (M.V. PILKINGTON et al.)<br>* Revendications; colonne 2, lignes 52-68; colonne 3, lignes 1-47 * | 1-7 | C 08 L  65/00 |
| | --- | | |
| X | GB-A-2 087 902  (HOHYU RUBBER)<br>* Revendications; page 3, lignes 39-53; page 4, lignes 10-32 * | 1-7 | |
| | --- | | |
| X | GB-A-1 341 740  (SOCIETE CHIMIQUE DES CHARBONNAGES)<br>* Revendications; page 2, lignes 17-20 * | 1-7 | |
| | --- | | |
| X | LU-A-  56 344  (CHARBONNAGES DE FRANCE)<br>* Revendications; page 3, lignes 18-32 * | 1-7 | DOMAINES TECHNIQUES RECHERCHES (Int. Cl 4) |
| | --- | | C 08 K<br>C 08 L |
| X | EP-A-0 046 095  (SOCIETE CHIMIQUE DES CHARBONNAGES)<br>* Revendications * | 1-7 | |
| | --- | | |
| X | FR-A-2 302 312  (SOCIETE CHIMIQUE DES CHARBONNAGES)<br>* Revendications * | 1-7 | |
| | ---        -/- | | |

Le présent rapport de recherche a été établi pour toutes les revendications

| Lieu de la recherche | Date d'achèvement de la recherche | Examinateur |
|---|---|---|
| LA HAYE | 18-05-1987 | DERAEDT G. |

Office européen
des brevets

**RAPPORT DE RECHERCHE EUROPEENNE**

Numero de la demande

**0237380**

EP 87 40 0269

Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | EP-A-0 105 775 (SOCIETE CHIMIQUE DES CHARBONNAGES) * Revendications * ----- | 1-7 | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 18-05-1987 | DERAEDT G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille, document correspondant

OEB Form 1503 03 82